Europäisches Patentamt

European Patent Office

Office européen des brevets

(11) Publication number: **0 087 400**
**B1**

# EUROPEAN PATENT SPECIFICATION

(45) Date of publication of patent specification: **12.11.86**

(51) Int. Cl.⁴: **F 16 B 12/46**

(21) Application number: **83850003.1**

(22) Date of filing: **14.01.83**

(54) **Improvement in a joint between plate-shaped elements.**

(30) Priority: **29.01.82 SE 8200527**

(43) Date of publication of application:
**31.08.83 Bulletin 83/35**

(45) Publication of the grant of the patent:
**12.11.86 Bulletin 86/46**

(84) Designated Contracting States:
**BE DE FR GB IT NL SE**

(56) References cited:
**CH-A- 373 298**
**DE-C- 249 610**
**DE-U-6 904 685**
**FR-E- 46 229**
**US-A-4 084 517**
**US-A-4 236 558**

(73) Proprietor: **ABG Trading AB
Box 616
S-151 27 Södertälje (SE)**

(72) Inventor: **Fritzell, Lars
Svanhildsvägen 21
S-161 41 Bromma (SE)**

(74) Representative: **Modin, Jan et al
c/o Axel Ehrners Patentbyra AB Box 5342
S-102 46 Stockholm (SE)**

Courier Press, Leamington Spa, England.

## Description

The present invention concerns a plate-shaped element, which for its assembly with at least one similar plate-shaped element is provided with at least one slot extending from one edge of the element to at least half the height of the element and continuing on both side faces of the element with a groove extending to the opposite edge of the element. The invention also concerns a joint obtained at assembly of two elements of the above mentioned kind, as well as a product assembled of at least two elements of the kind mentioned.

Two plate-shaped elements of the kind mentioned may be joined generally in a right angle cross-shape to form e.g. a table support, the elements being interengaged such that the slot of one element grips around the other element in its opposed grooves. Contrary to the most simple form of joint between two plate-shaped elements, where each element only has a slot, the form just mentioned ascertains that the plate portions on each side of the slot obtain guidance by the sides of the groove of the other element, as may be desirable when weak plate materials are being utilized.

A joint substantially embodying this principle is describved in US—A—4 084 517.

It is, however, necessary that the plate material holds accurate tolerances of thickness, so that a groove of one element, which groove has been made for a certain nominal thickness of a cooperating element, preferably shall not be too wide and absolutly not too narrow.

Since the tolerances of thickness of plate materials available on the market, preferably organical glass, such as polyarylate, e.g. the one sold under the trade name PLEXIGLAS, that are suitable for the manufacture of e.g. table supports, do not keep sufficiently accurate tolerances, one object of the invention is to provide a plate-shaped element of the kind initially indicated, which is apt to be joined together with a similar element, without any tolerance requirements to be met as concerns the element thickness.

Another object of the invention is to provide a joint between two plate-shaped elements, by which a better mutual guidance between the elements is achieved.

A further object of the invention is to provide a product assembled from at least two plate-shaped elements, which product is well suited as a support for e.g. table tops.

These objects have been achieved in that the invention has been given the characteristics of the annexed claims.

According to the invention, thus, the edges of the slot as well as those of the grooves in the element side faces, are continuously bevelled at an angle of 45° so that the bevels extends down to the bottoms of the grooves and so that the plate material remaining between the bottoms of the grooves as well as the free opening of the slot have an equal square cross section.

By this arrangement not only all variations in thickness loose their practical importance to the possibility of obtaining a joint between two plate-shaped elements, but one can even intentionally and at one's discretion assemble plate-shaped elements having different nominal thicknesses provided both elements have equal square cross sections between their groove bottoms and in their free slot openings.

GB—A—1 421 535 shows various embodiments of a furniture support constituted by two H-shaped welded tubular frames that are joined together in a way similar to that of plate-shaped elements according to the invention. Hereby linear contact is obtained between adjacent tubes, and for co-operation a certain tubular frame will fit only other certain tubular frames dimensioned for that purpose. At a joint between two plate-shaped elements according to the invention, on the contrary, surface contact is obtained between the bevelled groove and slot sides, respectively, which means an advantageous mutual guidance between the elements and good firmness to the assembled product, and, under the aforementioned condition any plate-shaped elements according to the invention can be assembled.

The invention will now be described with reference to the accompanying drawing, wherein

Fig. 1 shows a perspective view of an example of a plate-shaped element according to the invention;

Fig. 2 shows a joint between two plate-shaped elements according to the invention as seen along the grooves and slots, respectively, of the elements; and

Fig. 3 shows a perspective view of a product according to the invention assembled from two plate-shaped elements according to the invention.

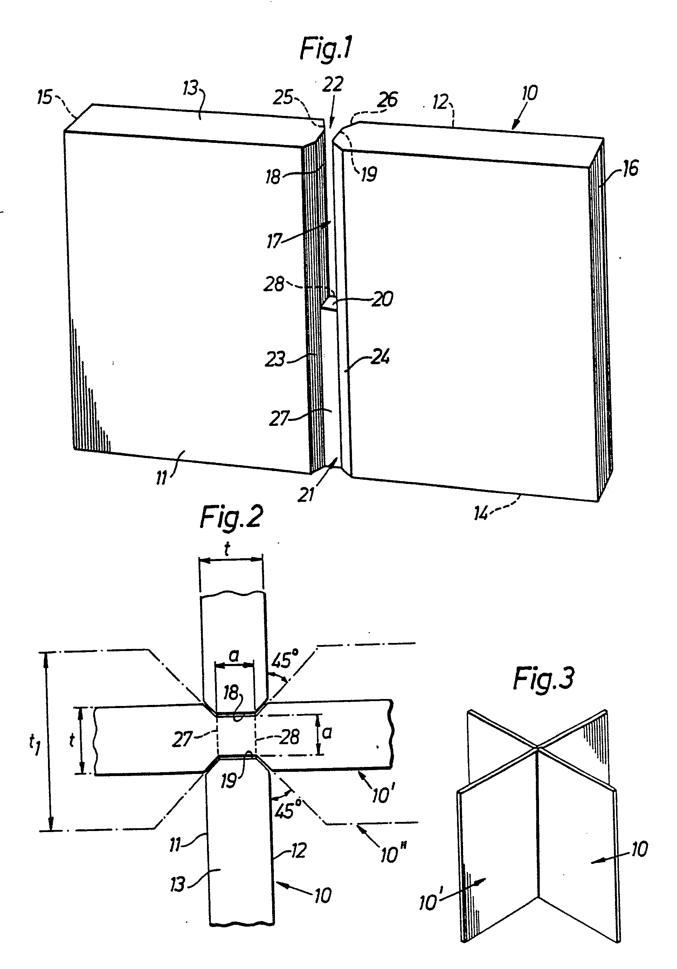

The plate-shaped element shown in Fig. 1 is a rectangular plate 10 having two opposed side faces 11 and 12, two mutually parallel edges 13 and 14, and two likewise mutually parallel side edges 15 and 16.

Perpendicularly from the upper edge 13 according to Fig. 1 a slot 17 extends through the plate 10, the nominal thickness of which is $t$ (see Fig. 2), said slot being directed towards the bottom edge 14 and reaches at least half the plate height as counted from above. The slot 17 has parallel sides 18 and 19 and a bottom surface 20 perpendicular thereto. The width of the slot, i.e. the distance between its sides 18 and 19, is $a$ (see Fig. 2).

In the side faces 11 and 12 of the plate there are further two opposed grooves 21 and 22 joining the slot 17 and extending to the bottom edge 14. According to the invention the edges of the slot 17 and the sides 23 and 24 of the groove 21 and the sides 25 and 26 of the groove 22 are bevelled at an angle of 45° with respect to the side faces 11 and 12 (see Fig. 2). The grooves are so deep that at this location the remaining plate cross section, i.e. the bottom surface 20 of the slot 17, between the bottoms 27 and 28 of the grooves 21 and 22, respectively, as well as the cross section of the free opening of the slot 17, is a square with the side $a$ (see Fig. 2), i.e. equal to the width of the slot.

In Fig. 2 are shown two equal plates 10 and 10' according to the invention which are assembled so that the respective square slot bottom surfaces 20 abut or at least face each other. As is clearly apparent there is surface contact between the slot edges and the groove sides of the plates along diagonal surfaces of contact (the visible interspaces have been drawn merely to make the individual plates discernible). Likewise it should clearly appear that e.g. a plate 10 having the nominal thickness $t$ can without any further measures be assembled with a plate 10", the outlines of which are drawn with dash-dotted lines and the thickness of which is $t_1$, while still the cross section between its groove bottoms has the thickness and the width $a$.

Through the invention, thus, has been created a possibility to provide joints not only between plate-shaped elements having large tolerances of thickness, but also between plate-shaped elements having widely different nominal thicknesses.

In Fig. 3 finally, are shown two plates 10 and 10' according to the invention which are assembled to form a product that, e.g., is suitable as a table support.

A square slot bottom surface is also meant to include the case when the slot 17 is made with a cylindrical cutter and, thus, the slot bottom surface 20 has a semi-cylindrical shape, but still a square projection.

## Claims

1. A plate-shaped element (10), which for its assembly with at least one similar plate-shaped element (10') is provided with at least one slot (17) extending from one edge (13) of the element (10) to at least half the height of the element and continuing on both side faces (11, 12) of the element with a groove (21, 22) extending to the opposite edge (14) of the element, characterized in that the edges of the slot (17) and the sides of the grooves (21, 22) in the element side faces (11, 12) are continuously bevelled at an angle of 45°, so that bevelled surfaces (23, 24, 25, 26) extend down to the bottoms (27, 28) of the grooves and so that the material of the plate-shaped element remaining between these bottoms and also the free opening of the slot (17) have an equal square cross-section of side length $a$.

2. A joint between two plate-shaped elements (10, 10') as defined in claim 1, said elements being interengaged such that the bottom surfaces (20) of the slots (17) face each other, characterized in that the bottom surfaces (20) of the slots (17) or their projections face each other with equal square surfaces and that contact between the elements (10, 10') takes place along bevelled surfaces (23, 24, 25, 26) of contact which are digonal with respect to the square bottom surfaces.

3. A product comprising at least two plate-shaped crosswise assembled elements (10, 10') as defined in claim 1, characterized in that the bottom surfaces (20) of the slots (17) or their projections face each other with equal square surfaces and that the elements for the rest contact each other over the entire height of the element along bevelled surfaces (23, 24, 25, 26) of contact which are diagonally directed with respect to the square bottom surfaces.

## Patentansprüche

1. Ein plattenförmiges Element (10), das für seinen Zusammenbau mit wenigstens einem ähnlichen plattenförmigen Element (10') mit wenigstens einem Schlitz (17) versehen ist, der von einem Rand (13) des Elements (10) bis zu wenigstens der halben Höhe des Elements reicht und sich auf beiden Seitenflächen (11, 12) des Elements in einer Nut (21, 22) fortsetzt, welche bis zum gegenüberliegenden Rand (14) des Elementes reicht, dadurch gekennzeichnet, daß die Kanten des Schlitzes (17) und der Seiten der Nuten (21, 22) an den Seitenflächen (11, 12) des Elements durchgehend mit einem Winkel von 45° abgeschrägt sind, so daß abgeschrägte Flächen (23, 24, 25, 26) sich nach unten zu den Böden (27, 28) der Nuten erstrecken, und so daß das Material des plattenförmigen Elements, welches zwischen diesen Böden verbleibt, und auch die freie Öffnung des Schlitzes (17) einen gleichen quadratischen Querschnitt mit der Seitenlänge $a$ haben.

2. Ein Verbindung zwischen zwei plattenförmigen Elementen (10, 10') wie in Anspruch 1 bestimmt, wobei die Elemente derart ineinander eingreifen, daß die Bodenflächen (20) der Schlitze (17) einander gegenüberliegen, dadurch gekennzeichnet, daß die Bodenflächen (20) der Schlitze (17) oder ihre Projektionen einander mit gleichen Quadratflächen gegenüberliegen, und daß Kontakt zwischen den Elementen (10, 10') entlang abgeschrägter Kontaktflächen (23, 24, 25, 26) stattfindet die bezüglich der quadratischen Bodenflächen diagonal sind.

3. Ein Erzeugnis aus wenigstens zwei plattenförmigen, kreuzweise zusammengebauten Elementen (10, 10') wie in Anspruch 1 bestimmt, dadurch gekennzeichnet, daß die Bodenflächen (20) der Schlitze (17) oder ihre Projektionen einander mit gleichen Quadratflächen gegenüberliegen, und daß die Elemente im übrigen einander über die gesamte Höhe des Elements entlang abgeschrägter Kontaktflächen (23, 24, 25, 26) berühren, die bezüglich der quadratischen Bodenflächen diagonal gerichtet sind.

## Revendications

1. Elément en forme de plaque (10), présentant en vue de son assemblage avec au moins un élément en forme de plaque semblable (10') au moins une fente (17) allant d'un bord (13) de l'élément (10) jusqu'à la moitié au moins de la hauteur de l'élément et se poursuivant sur les deux faces latérales (11, 12) de l'élément par une rainure (21, 22) s'étendant jusqu'au bord opposé (14) de l'élément, caractérisé en ce que les bords de la fente (17) et les côtés des rainures (21, 22) des faces latérales (11, 12) de l'élément présentent un biseautage continu à 45°, de sorte que des surfaces biseautées (23, 24, 25, 26) s'étendent jusqu'aux fonds (27, 28) des rainures et que le matériau de l'élément en forme de plaque subsistant entre ces fonds et aussi l'ouverture libre de la fente (17) ont une même section carrée à longueur de côté *a*.

2. Joint entre deux éléments en forme de plaque (10, 10') selon la revendication 1, lesdits éléments étant engagés l'un sur l'autre de façon que les surfaces inférieures (20) des fentes (17) soient en regard, caractérisé en ce que les surfaces inférieures (20) des fentes (17) ou leurs projections se font face par des surfaces carrées égales et en ce qu'un contact entre les éléments (10, 10') a lieu le long des surfaces biseautées (23, 24, 25, 26) de contact qui sont diagonales par rapport aux surfaces inférieures carrées.

3. Produit comprenant au moins deux éléments en forme de plaque (10, 10') assemblés en croix selon la revendication 1, caractérisé en ce que les surfaces inférieures (20) des fentes (17) ou leurs projections se font face par des surfaces carrées égales et que les éléments se touchent par ailleurs sur toute la hauteur de l'élément suivant des surfaces biseautées (23, 24, 25, 26) de contact qui sont dirigées diagonalement par rapport aux surfaces inférieures carrées.

0 087 400

Fig.1

Fig.2

Fig.3